(19) Europäisches Patentamt / European Patent Office / Office européen des brevets

(11) **EP 4 332 192 A1**

(12) **EUROPEAN PATENT APPLICATION**
published in accordance with Art. 153(4) EPC

(43) Date of publication:
**06.03.2024 Bulletin 2024/10**

(21) Application number: **22795848.5**

(22) Date of filing: **27.04.2022**

(51) International Patent Classification (IPC):
$C09J\ 11/08^{(2006.01)}$    $C08F\ 220/10^{(2006.01)}$
$C09J\ 123/00^{(2006.01)}$    $C09J\ 133/00^{(2006.01)}$
$C09J\ 133/06^{(2006.01)}$    $C09J\ 151/06^{(2006.01)}$
$C09J\ 7/38^{(2018.01)}$

(52) Cooperative Patent Classification (CPC):
C08F 220/10; C09J 7/38; C09J 11/08;
C09J 123/00; C09J 133/00; C09J 133/06;
C09J 151/06

(86) International application number:
**PCT/JP2022/019069**

(87) International publication number:
**WO 2022/230935 (03.11.2022 Gazette 2022/44)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **30.04.2021   JP 2021077810
30.04.2021   JP 2021077811**

(71) Applicant: SEKISUI CHEMICAL CO., LTD.
530-0047 (JP)

(72) Inventors:
• **OGATA, Yudai**
  Mishima-gun, Osaka 618-0021 (JP)
• **TSUJI, Nagisa**
  Mishima-gun, Osaka 618-0021 (JP)
• **SHIMOJITOSHO, Akira**
  Mishima-gun, Osaka 618-0021 (JP)
• **SHINOHARA, Takamichi**
  Mishima-gun, Osaka 618-0021 (JP)

(74) Representative: **Cabinet Beau de Loménie
158, rue de l'Université
75340 Paris Cedex 07 (FR)**

(54) **ADHESIVE TAPE**

(57)    The present invention aims to provide an adhesive tape achieving both excellent adhesion and excellent holding power. Provided is an adhesive tape including an adhesive layer, the adhesive layer having scattering peaks in a scattering vector q range from 0.05 nm$^{-1}$ to 1.0 nm$^{-1}$ in small-angle X-ray scattering (SAXS) measurements at 23°C and 100°C, and the adhesive layer having peaks of a loss tangent tan $\delta$ as determined by dynamic viscoelasticity measurement at a measurement frequency of 1 Hz, a temperature of a peak observed at the highest temperature among the peaks being 45°C or lower.

EP 4 332 192 A1

**Description**

TECHNICAL FIELD

The present invention relates to adhesive tapes.

BACKGROUND ART

Adhesive tapes are used for assembling portable electronic devices such as mobile phones and personal digital assistants (PDAs) (for example, Patent Literatures 1 and 2). Adhesive tapes are also used for bonding optical members together (for example, Patent Literature 3).

CITATION LIST

- Patent Literature

    Patent Literature 1: JP 2009-242541 A
    Patent Literature 2: JP 2009-258274 A
    Patent Literature 3: JP 2012-214544 A

SUMMARY OF INVENTION

- Technical problem

Adhesive tapes used for fixing such components require both resistance to peeling (adhesion) and resistance to lateral shifting (holding power). For improving the adhesion, design for encouraging stretch under peeling stress, in other words, increasing the flexibility of the adhesive, is effective. On the other hand, for improving the holding power, design for preventing deformation under shear stress, in other words, hardening the adhesive, is effective. The adhesion and the holding power thus have a trade-off relationship, making it highly difficult to achieve both adhesion and holding power at high levels.
The present invention aims to provide an adhesive tape achieving both excellent adhesion and excellent holding power.

- Solution to problem

The present invention relates to an adhesive tape including an adhesive layer, the adhesive layer having a scattering peak in a scattering vector q range from 0.05 $nm^{-1}$ to 1.0 $nm^{-1}$ in small-angle X-ray scattering (SAXS) measurement at 23°C and a scattering peak in a scattering vector q range from 0.05 $nm^{-1}$ to 1.0 $nm^{-1}$ in small-angle X-ray scattering (SAXS) measurement at 100°C, and the adhesive layer having peaks of a loss tangent tan $\delta$ as determined by dynamic viscoelasticity measurement at a measurement frequency of 1 Hz, a temperature of a peak observed at the highest temperature among the peaks being 45°C or lower.
The present invention is described in detail below.
The adhesive tape of the present invention includes an adhesive layer, the adhesive layer having a scattering peak in a scattering vector q range from 0.05 $nm^{-1}$ to 1.0 $nm^{-1}$ in small-angle X-ray scattering (SAXS) measurement at 23°C and a scattering peak in a scattering vector q range from 0.05 $nm^{-1}$ to 1.0 $nm^{-1}$ in small-angle X-ray scattering (SAXS) measurement at 100°C.
The SAXS is an analytical technique involving exposing a material to X-rays to scatter X-rays and measuring the intensity of scattered X-rays observed in low-angle regions with scattering angles $2\theta < 10°$, so as to evaluate the structural information of the material at the level of nanometers. This technique can determine the structure of adhesive molecules. The scattering vector q is represented by $4\pi\sin\theta/\lambda$, wherein $\lambda$ is the wavelength of incident X-rays. An adhesive having a scattering peak in the above-mentioned range in small-angle X-ray scattering measurement has a phase-separated structure with pseudo-crosslinking points, where specific portions of the adhesive aggregate by interactions therebetween. When the pseudo-crosslinking points are maintained, adhesive molecules are less mobile and tend to provide excellent holding power. When having a scattering peak in the range not only at 23°C but also at 100°C, the adhesive can achieve sufficient holding power even at high temperature. When satisfying the peak temperature of the loss tangent tan $\delta$ described later, the adhesive can achieve both adhesion and holding power sufficiently even at high temperature. The scattering peaks in the SAXS measurements at 23°C and 100°C can be adjusted by adjusting the type, the polymerization ratio, and the molecular weight of the monomers constituting the adhesive constituting the adhesive layer, and the type and the amount of the tackifier resins described later.

A scattering peak in SAXS measurement means a peak in a scattering curve plotted with the scattering vector q on the X-axis and the scattering intensity on the Y-axis.

The SAXS measurement can be performed using a measurement sample obtained by bonding a sample to a sample stage having a thickness of 1 mm and using an X-ray diffraction device (e.g., "SmartLab" produced by Rigaku Corporation or its equivalent product.) under the following conditions. For the SAXS measurement at 100°C, a sample is bonded to a copper plate having a thickness of 100 um and heated on a hot plate (e.g., "PCC100G" produced by MCA FACTORY or its equivalent product). After the temperature reaches 100°C, the temperature is maintained at 100°C for five minutes, and then the measurement is performed.

X-ray source: $CuK_\alpha$ (wavelength $\lambda$: 0.154 nm)
tube voltage: 9 kW
optical system: small-angle scattering
measurement range: 0.06 to 2°
measurement step: 0.02°
scan speed: 1°/min

The adhesive layer preferably has a scattering peak in a scattering vector q range from 0.05 $nm^{-1}$ to 1.0 $nm^{-1}$ in small-angle X-ray scattering (SAXS) measurement at 150°C.

When the adhesive layer has a scattering peak in the above-mentioned range also at 150°C, the adhesive tape can achieve both adhesion and holding power even at higher temperature. The SAXS measurement at 150°C can be performed by the same method as for the SAXS measurement at 100°C, except that the heating temperature is 150°C.

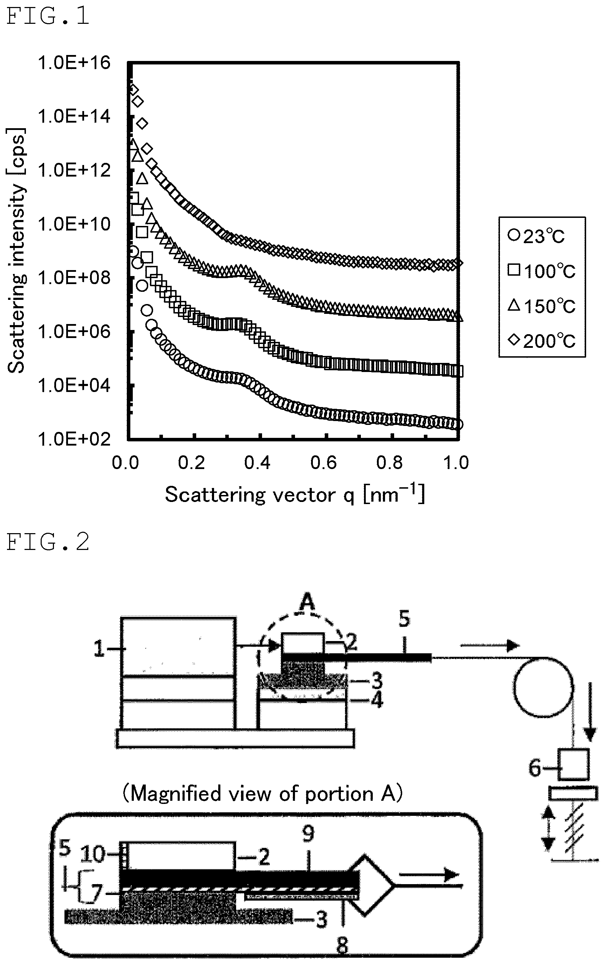

FIG. 1 shows an example of results of SAXS measurement on the adhesive layer of the adhesive tape of the present invention. As shown in FIG. 1, when the adhesive layer has scattering peaks present in the range from 0.05 $nm^{-1}$ to 1.0 $nm^{-1}$, the adhesive has a structure including pseudo-crosslinking points, allowing both adhesion and holding power to be achieved.

In FIG. 1, the scattering intensity is offset 100 times for each measurement temperature. In FIG. 1, scattering peaks are observed at 23°C, 100°C, and 150°C, but no scattering peak is observed at 200°C.

The adhesive layer has peaks of a loss tangent tan $\delta$ as determined by dynamic viscoelasticity measurement at a measurement frequency of 1 Hz, and a temperature of a peak observed at the highest temperature among the peaks is 45°C or lower. A peak temperature of the loss tangent tan $\delta$ corresponds to a glass transition temperature of the adhesive layer.

When the adhesive layer has peaks of the loss tangent, and the temperature of the peak observed at the highest temperature is 45°C or lower, the adhesive molecules are more mobile and can exhibit sufficient adhesion.

The reason that the adhesive tape of the present invention can achieve both excellent adhesion and excellent holding power is not completely clear, but a possible mechanism is as follows.

The adhesive having specific scattering peaks and satisfying the peak temperature of the loss tangent tan $\delta$ has excellent holding power because it has pseudo-crosslinking points where specific portions of the adhesive aggregate by interactions therebetween. Meanwhile, the adhesive has excellent adhesion when deformed or under high strain, such as when the adhesive tape is peeled off, because the pseudo-crosslinking points break and allow adhesive molecules to be more mobile. This enables both adhesion and holding power to be achieved. The temperature of the peak of the loss tangent of the adhesive layer observed at the highest temperature is preferably 42°C or lower, more preferably 35°C or lower, still more preferably 25°C or lower.

The lower limit of the temperature of the peak of the loss tangent of the adhesive layer observed at the highest temperature is not limited, but is preferably -30°C or higher, more preferably 0°C or higher.

The loss tangent of the adhesive layer can be measured by the following method.

A measurement sample consisting of the adhesive layer is prepared. A dynamic viscoelastic spectrum from -50°C to 200°C of the obtained measurement sample is measured using a dynamic viscoelasticity measuring device such as viscoelastic spectrometer (e.g., DVA-200, produced by IT Measurement Co., Ltd. or its equivalent product) at 5°C/min and a measurement frequency of 1 Hz in a low-heating-rate, shear deformation mode. From the obtained dynamic viscoelastic spectrum, the loss tangent is calculated.

The temperature of the peak of the loss tangent observed at the highest temperature can be adjusted by adjusting the type, the polymerization ratio, the monomer arrangement, and the molecular weight of the monomers constituting the adhesive, and the type and the amount of the tackifier resins described later. Specifically, the peak temperature can be increased by increasing the amount, in the adhesive, of a structural unit derived from a monomer whose homopolymer has a high glass transition temperature. The peak temperature can be decreased by increasing the amount of a structural unit derived from a monomer whose homopolymer has a low glass transition temperature.

The scattering peaks in the SAXS measurements at 23°C and 100°C and the peak temperature of the loss tangent may be both satisfied by using an adhesive having a composition capable of forming a microphase separation structure, while setting the glass transition temperature of a phase constituting the microphase separation structure to be not higher than the peak temperature of the loss tangent. Specifically, it is preferred to use the below-described acrylic copolymer containing a structure derived from an alkyl (meth)acrylate and a structure derived from an olefinic polymer having a polymerizable unsaturated double bond at an end.

The adhesive layer preferably has a gel fraction of less than 50%.

When the adhesive layer has a gel fraction of less than 50%, in other words, when the adhesive has a low degree of crosslinking, adhesive molecules easily stretch, leading to higher adhesion.

The gel fraction of the adhesive layer is more preferably 30% or less, still more preferably 15% or less.

The lower limit of the gel fraction of the adhesive layer is not limited, and may be 0%, for example.

The gel fraction of the adhesive layer can be measured by the following method.

First, 0.1 g of the adhesive of the adhesive layer is scraped off, immersed in 50 ml of ethyl acetate, and shaken with a shaker at a temperature of 23°C at 200 rpm for 24 hours. After shaking, a metal mesh (aperture #200 mesh) is used to separate ethyl acetate and the adhesive having swollen by absorbing ethyl acetate. The separated adhesive is dried at 110°C for one hour. The weight of the adhesive including the metal mesh after drying is measured, and the gel fraction is calculated using the following equation (1).

$$\texttt{Gel fraction (\%) = 100} \times \texttt{(W}_1 - \texttt{W}_2\texttt{)/W}_0 \quad \texttt{(1)}$$

($W_0$: the initial weight of the adhesive, $W_1$: the weight of the adhesive including the metal mesh after drying, $W_2$: the initial weight of the metal mesh)

The thickness of the adhesive layer is not limited. The thickness is preferably 5 um or greater, more preferably 10 um or greater, still more preferably 15 um or greater, and is preferably 200 um or less, more preferably 150 um or less, still more preferably 100 um or less. When the thickness of the adhesive layer is in this range, the adhesive tape can have excellent adhesion, excellent holding power, and excellent handleability.

The adhesive constituting the adhesive layer may be any adhesive that has peaks in the above scattering vector q range in the SAXS measurements and satisfies the temperature of the peak of the loss tangent observed at the highest temperature. To easily satisfy them, the adhesive preferably contains an acrylic copolymer. The acrylic copolymer is preferably a main component (i.e., a polymer component contained in an amount of more than 50% by weight) among the polymer components in the adhesive layer.

The acrylic copolymer more preferably contains a structure derived from an alkyl (meth)acrylate and a structure derived from an olefinic polymer having a polymerizable unsaturated double bond at an end.

The acrylic copolymer has a structure in which olefinic polymer portions aggregate by interactions therebetween and form pseudo-crosslinking points. With such a structure, the acrylic copolymer under low strain is hard like a crosslinked adhesive and shows high holding power. In contrast, the acrylic copolymer under high strain shows the properties of a highly flexible adhesive because the pseudo-crosslinking points break and allow the molecules of the acrylic copolymer to stretch. In other words, using the acrylic copolymer as the adhesive constituting the adhesive layer makes it easy to satisfy the peak positions in the SAXS measurements and the temperature of the peak of the loss tangent observed at the highest temperature. The (meth)acrylic acid herein refers to acrylic acid or methacrylic acid.

The alkyl (meth)acrylate is not limited. Examples thereof include alkyl acrylates having a linear or branched C1-C24 alkyl group. Specific examples include methyl (meth)acrylate, ethyl (meth)acrylate, n-butyl (meth)acrylate, s-butyl (meth)acrylate, t-butyl (meth)acrylate, isobutyl (meth)acrylate, n-pentyl (meth)acrylate, isopentyl (meth)acrylate, n-hexyl (meth)acrylate, isohexyl (meth)acrylate, n-heptyl (meth)acrylate, isoheptyl (meth)acrylate, 2-ethylhexyl (meth)acrylate, n-octyl (meth)acrylate, isooctyl (meth)acrylate, n-nonyl (meth)acrylate, isononyl (meth)acrylate, n-decyl (meth)acrylate, isodecyl (meth)acrylate, n-dodecyl (meth)acrylate, n-tridecyl (meth)acrylate, n-tetradecyl (meth)acrylate, pentadecyl (meth)acrylate, hexadecyl (meth)acrylate, heptadecyl (meth)acrylate, stearyl (meth)acrylate, and isostearyl (meth)acrylate. These alkyl acrylates are appropriately selected such that the peak positions in the SAXS measurements and the temperature of the peak of the loss tangent observed at the highest temperature are satisfied, while taking into consideration the type of the olefinic polymer having a polymerizable unsaturated double bond at an end as a raw material of the acrylic copolymer and the type of other monomers, as well as additives to be compounded. For example, in the case of the alkyl acrylates having an alkyl group with a carbon number of 8 or less, the glass transition temperature tends to decrease as the carbon number increases. In the case of the alkyl acrylates having an alkyl group with a carbon number of 9 or greater, the glass transition temperature tends to increase as the carbon number increases. Alkyl acrylates having a C4-C8 alkyl group are preferred among these, and butyl acrylate is more preferred, because they make it easy to satisfy the temperature of the peak of the loss tangent observed at the highest temperature. Each of these alkyl (meth)acrylates may be used alone, or two or more of them may be used in combination.

The acrylic copolymer preferably contains 50% by weight or more and 95% by weight or less of the structure derived from an alkyl (meth)acrylate.

When the amount of the structure derived from an alkyl (meth)acrylate in the acrylic copolymer is in the range, the peak positions in the SAXS measurements and the temperature of the peak of the loss tangent observed at the highest temperature can be easily satisfied.

The amount of the structure derived from an alkyl (meth)acrylate in the acrylic copolymer is more preferably 60% by weight or more, still more preferably 70% by weight or more and is more preferably 90% by weight or less, still more preferably 85% by weight or less.

The olefinic polymer having a polymerizable unsaturated double bond at an end may have a polymerizable unsaturated double bond at one end or may have polymerizable unsaturated double bonds at both ends. Preferred is an olefinic polymer having a polymerizable unsaturated double bond at one end because such an olefinic polymer is less likely to undergo chemical intramolecular crosslinking. Examples of the polymerizable unsaturated double bond include a (meth)acryloyl group, a vinyl ether group, and a styryl group. A (meth)acryloyl group is preferred because it has excellent copolymerizability with alkyl (meth)acrylates.

Examples of the olefinic polymer include ethylene-butylene copolymers, ethylene-propylene copolymers, ethylene polymers, propylene polymers, and butylene polymers.

Specific examples of the olefinic polymer having a polymerizable unsaturated double bond at one end include an ethylene macromonomer having a (meth)acryloyl group at one end, a propylene macromonomer having a (meth)acryloyl group at one end, an ethylene-butylene macromonomer having a (meth)acryloyl group at one end, and an ethylene-propylene macromonomer having a (meth)acryloyl group at one end. An ethylene-butylene macromonomer having a (meth)acryloyl group at one end and an ethylene-propylene macromonomer having a (meth)acryloyl group at one end are preferred, because they make it easy to satisfy the peak positions in the SAXS measurements and the temperature of the peak of the loss tangent observed at the highest temperature. Each of these olefinic polymers having a polymerizable unsaturated double bond at an end may be used alone, or two or more of them may be used in combination. A macromonomer herein refers to a monomer having a weight average molecular weight of about 1,000 to 100,000 and having a polymerizable functional group.

The acrylic copolymer preferably contains 5% by weight or more and 30% by weight or less of the structure derived from an olefinic polymer having a polymerizable unsaturated double bond at an end.

When the amount of the structure derived from an olefinic polymer having a polymerizable unsaturated double bond at an end in the acrylic copolymer is 5% by weight or more, an appropriate number of pseudo-crosslinking points are formed, allowing both adhesion and holding power to be more easily achieved. When the amount of the structure derived from an olefinic polymer having a polymerizable unsaturated double bond at an end is 30% by weight or less, cohesive failure can be further reduced.

The amount of the structure derived from an olefinic polymer having a polymerizable unsaturated double bond at an end in the acrylic copolymer is more preferably 8% by weight or more, still more preferably 10% by weight or more and is more preferably 27% by weight or less, still more preferably 25% by weight or less.

In the acrylic copolymer, the amount of a structure derived from a monomer containing two or more polymerizable unsaturated double bonds is preferably 0.1% by weight or less. As described above, the acrylic copolymer under low strain shows properties like those of an adhesive with a crosslinked structure because the olefinic polymer portions form pseudo-crosslinking points. In contrast, the acrylic copolymer under high strain shows properties like those of an adhesive without a crosslinked structure because the pseudo-crosslinking points break. Thus, reducing the amount of the structure derived from a monomer containing two or more polymerizable unsaturated double bonds, which easily form a chemically crosslinked structure, allows the acrylic copolymer molecules to easily stretch under high strain, leading to more improved adhesion. The amount of the structure derived from a monomer containing two or more polymerizable unsaturated double bonds is more preferably 0%.

The acrylic copolymer preferably contains a structure derived from a polar group-containing monomer.

When the acrylic copolymer contains a structure derived from a polar group-containing monomer, polar groups interact with each other and thus can increase the adhesion and the holding power. Examples of the polar group-containing monomer include unsaturated monocarboxylic acids such as (meth)acrylic acid, (meth)acryloyl acetic acid, (meth)acryloyl propionic acid, (meth)acryloyl butyric acid, (meth)acryloyl pentanoic acid, and crotonic acid; and maleic acid, fumaric acid, citraconic acid, mesaconic acid, itaconic acid, N-vinyl-2-pyrrolidone, (meth)acryloylmorpholine, (meth)acrylamide, N,N-dimethyl(meth)acrylamide, N-isopropyl(meth)acrylamide, dimethylaminoethyl (meth)acrylate, and diethylaminoethyl (meth)acrylate. In particular, for higher adhesion and higher holding power, the polar group-containing monomer preferably contains a carboxy group. Each of these polar group-containing monomers may be used alone, or two or more of these may be used in combination.

The acrylic copolymer preferably contains 0.1% by weight or more and 10% by weight or less of the structure derived from a polar group-containing monomer.

When the amount of the structure derived from a polar group-containing monomer in the acrylic copolymer is 0.1% by weight or more, interactions between polar groups can be enhanced. When the amount is 10% by weight or less, the acrylic copolymer does not have excessive hardness, leading to higher adhesion.

The amount of the structure derived from a polar group-containing monomer in the acrylic copolymer is more preferably 1% by weight or more, still more preferably 3% by weight or more and is more preferably 8% by weight or less, still more preferably 6% by weight or less.

The acrylic copolymer preferably has a weight average molecular weight of 200,000 or greater and 2,000,000 or less.

When the weight average molecular weight of the acrylic copolymer is 200,000 or greater, the cohesive force can be higher. When the weight average molecular weight is 2,000,000 or less, a decrease in the adhesion can be reduced. The weight average molecular weight of the acrylic copolymer is more preferably 500,000 or greater and 1,500,000 or less.

The weight average molecular weight can be measured by GPC using polystyrene standards, for example. Specifically, it can be measured using "2690 Separations Module" produced by Waters Corporation as a measurement device, "GPC KF-806L" produced by Showa Denko K.K. as a column, and ethyl acetate as a solvent, under the conditions of a sample flow rate of 1 mL/min and a column temperature of 40°C.

The acrylic copolymer preferably has a molecular weight distribution (Mw/Mn) of 1.0 or greater and 6.0 or less.

When the molecular weight distribution of the acrylic copolymer is in the range, the peak positions in the SAXS measurements and the temperature of the peak of the loss tangent observed at the highest temperature can be easily satisfied. The molecular weight distribution of the acrylic copolymer is more preferably 1.5 or greater and 4.5 or less.

The adhesive layer preferably contains a high-hydroxy-value tackifier resin having a hydroxy value of 15 mg KOH/g or greater.

A tackifier resin having a hydroxy value in the range has high polarity and thus is less likely to be compatible with low-polarity olefinic polymer portions. As a result, such a tackifier resin can enhance the adhesion without inhibiting the formation of pseudo-crosslinking points due to interactions of low-polarity olefinic polymer portions.

The hydroxy value of the high-hydroxy-value tackifier resin is more preferably 30 mg KOH/g or greater, and is preferably 200 mg KOH/g or less, more preferably 150 mg KOH/g or less. Examples of the high-hydroxy-value tackifier resin include terpene phenolic resins and polymerized rosin esters.

The adhesive layer preferably contains 1 part by weight or more and 40 parts by weight or less of the high-hydroxy-value tackifier resin relative to 100 parts by weight of the acrylic copolymer.

The amount of the high-hydroxy-value tackifier resin is more preferably 20 parts by weight or more and 35 parts by weight or less.

In the adhesive layer, the amount of a low-hydroxy-value tackifier resin having a hydroxy value of less than 15 mg KOH/g is preferably 5 parts by weight or less relative to 100 parts by weight of the acrylic copolymer.

A tackifier resin having a hydroxy value of less than 15 mg KOH/g has a low polarity and is more likely to be compatible with the structural units derived from an olefinic polymer. The low-hydroxy-value tackifier resin in the amount above is less likely to inhibit the formation of pseudo-crosslinking points by interactions between the structural units derived from an olefinic polymer. As a result, the adhesive tape can have better holding power. The amount of the low-hydroxy-value tackifier resin having a hydroxy value of less than 15 mg KOH/g relative to 100 parts by weight of the acrylic copolymer is more preferably 0 parts by weight.

As described above, to increase the holding power, the adhesive layer preferably contains no or as little low-hydroxy-value tackifier resin as possible. However, to improve the initial adhesion, the adhesive layer preferably contains 5 parts by weight or more and 70 parts by weight or less of the low-hydroxy-value tackifier resin having a hydroxy value of less than 15 mg KOH/g relative to 100 parts by weight of the acrylic copolymer, more preferably in combination with the high-hydroxy-value tackifier resin.

The reason that the use of the low-hydroxy-value tackifier resin improves the initial adhesion is not completely clear, but a possible mechanism is as follows. The tackifier resin having a hydroxy value of less than 15 mg KOH/g has a low polarity and thus is more likely to be compatible with the structural units derived from an olefinic polymer. When the low-hydroxy-value tackifier resin is compatible with pseudo-crosslinking points, the pseudo-crosslinking points appropriately soften, which presumably improves the adhesion. Even when a large amount of the low-hydroxy-value tackifier resin is contained, combining it with the high-hydroxy-value tackifier resin is considered to reduce a decrease in the holding power, so that the holding power is secured while the initial adhesion is improved.

The amount of the low-hydroxy-value tackifier resin is more preferably more than 5 parts by weight and 60 parts by weight or less, still more preferably 10 parts by weight or more and 50 parts by weight or less, further preferably 20 parts by weight or more, even further preferably 30 parts by weight or more, further more preferably 40 parts by weight or more.

Examples of the low-hydroxy-value tackifier resin include terpene resins and petroleum resins.

The adhesive layer may contain conventionally known fine particles and additives such as inorganic fine particles, conductive fine particles, antioxidants, foaming agents, organic fillers, and inorganic fillers, if necessary.

The adhesive tape of the present invention may be a non-support tape including no substrate, or may be a supported tape including a substrate and the adhesive layer formed thereon.

The substrate is not limited. Examples thereof include sheets made of resins such as acrylic, olefin, polycarbonate, vinyl chloride, ABS, polyethylene terephthalate (PET), nylon, urethane, and polyimide, sheets having a mesh-like structure, and porous sheets.

The thickness of the substrate is not limited, but is preferably 5 um or greater and 200 um or less. The substrate having a thickness in this range allows the adhesive tape to have appropriate stiffness and thus excellent handleability. The thickness of the substrate is more preferably 10 um or greater and 150 um or less.

The method for producing the adhesive tape of the present invention is not limited, and may be a conventionally known method. For example, first, the alkyl (meth)acrylate, the olefinic polymer having a polymerizable unsaturated double bond at an end, and if necessary other monomers are copolymerized by a conventional method to prepare an acrylic copolymer. Next, the obtained acrylic copolymer is mixed with the tackifier resin(s) and other additives if necessary to prepare an adhesive solution, and the adhesive solution is applied to a release-treated film and dried, whereby the adhesive tape can be produced. Alternatively, the adhesive tape produced by the method above may be used as an adhesive layer and bonded to a substrate, whereby a supported adhesive tape may be produced.

- Advantageous Effects of Invention

The present invention can provide an adhesive tape achieving both excellent adhesion and excellent holding power.

BRIEF DESCRIPTION OF DRAWINGS

FIG. 1 is a graph of an example of results of SAXS measurement of the adhesive layer of the adhesive tape of the present invention.
FIG. 2 is a schematic view illustrating a method for evaluating the holding power of the adhesive tape.

DESCRIPTION OF EMBODIMENTS

The embodiments of the present invention will be described in more detail below with reference to, but not limited to, examples.

(Production of acrylic copolymer 1)

A reactor equipped with a thermometer, a stirrer, and a condenser was provided. The reactor was charged with 91 parts by weight of butyl acrylate, 6 parts by weight of acrylic acid, 3 parts by weight of an ethylene-butylene macromonomer, 0.01 parts by weight of laurylmercaptan, and 80 parts by weight of ethyl acetate, and then heated to start reflux. Subsequently, 0.01 parts by weight of 1,1-bis(t-hexylperoxy)-3,3,5-trimethylcyclohexane as a polymerization initiator was added to the reactor to start polymerization under reflux. Then, 0.01 parts by weight of 1,1-bis(t-hexylperoxy)-3,3,5-trimethylcyclohexane was added one hour after and two hours after the start of polymerization. Four hours after the start of polymerization, 0.05 parts by weight of t-hexyl peroxypivalate was added to continue the polymerization reaction. Eight hours after the start of polymerization, an ethyl acetate solution of a functional group-containing acrylic polymer 1 with a solid content of 55% by weight, a weight average molecular weight of 700,000, and a molecular weight distribution (Mw/Mn) of 3.5 was obtained. The weight average molecular weight and the molecular weight distribution were measured using 2690 Separations Module (produced by Waters) as a measurement device, GPC KF-806L (produced by Showa Denko K.K.) as a column, ethyl acetate as a solvent, under the conditions of a sample flow rate of 1 mL/min and a column temperature of 40°C.

(Production of acrylic copolymers 2 to 19)

Ethyl acetate solutions of acrylic copolymers 2 to 19 were obtained as in the production of the acrylic copolymer 1 except that the type of the materials and the composition were as shown in Tables 1 and 2. The details of macromonomers are as follows.

Ethylene-butylene macromonomer: olefinic polymer having a methacryloyl group at one end, produced by Kraton Polymers Japan, HPVM-L1253, weight average molecular weight 7,000, glass transition temperature -68°C

Methyl methacrylate macromonomer: acrylic polymer having a methacryloyl group at one end, produced by Toagosei Co., Ltd., AA-6, weight average molecular weight 11,600, glass transition temperature 100°C

Ethylene glycol macromonomer: oxyalkylene polymer having a methacryloyl group at one end, produced by NOF Corporation, PME-4000, weight average molecular weight 4,000, glass transition temperature -65°C

[Table 1]

| Acrylic copolymer | | 1 | 2 | 3 | 4 | 5 | 6 | 7 | 8 | 9 | 10 |
|---|---|---|---|---|---|---|---|---|---|---|---|
| Composition [% by weight] | Butyl acrylate | 91.0 | 89.0 | 74.0 | 64.0 | 54.0 | 80.0 | 74.0 | 79.9 | 70.0 | 68.0 |
| | 2-Ethylhexyl acrylate | 0 | 0 | 0 | 0 | 0 | 0 | 0 | 0 | 0 | 0 |
| | Ethyl acrylate | 0 | 0 | 0 | 0 | 0 | 0 | 0 | 0 | 0 | 0 |
| | Acrylic acid | 6 | 6 | 6 | 6 | 6 | 0 | 0 | 0.1 | 10 | 12 |
| | 4-Hydroxybutyl acrylate | 0 | 0 | 0 | 0 | 0 | 0 | 6 | 0 | 0 | 0 |
| | Ethylene-butylene macromonomer | 3 | 5 | 20 | 30 | 40 | 20 | 20 | 20 | 20 | 20 |
| | Methyl methacrylate macromonomer | 0 | 0 | 0 | 0 | 0 | 0 | 0 | 0 | 0 | 0 |
| | Ethylene glycol macromonomer | 0 | 0 | 0 | 0 | 0 | 0 | 0 | 0 | 0 | 0 |
| Molecular weight | Mw [$\times 10^4$] | 70 | 70 | 70 | 70 | 70 | 70 | 70 | 70 | 70 | 70 |
| Molecular weight distribution | Mw/Mn | 3.5 | 3.5 | 3.5 | 3.5 | 3.5 | 3.5 | 3.5 | 3.5 | 3.5 | 3.5 |

[Table 2]

| Acrylic copolymer | | 11 | 12 | 13 | 14 | 15 | 16 | 17 | 18 | 19 |
|---|---|---|---|---|---|---|---|---|---|---|
| Composition [% by weight] | Butyl acrylate | 74.0 | 74.0 | 74.0 | 0 | 37.0 | 94.0 | 74.0 | 74.0 | 0.0 |
| | 2-Ethylhexyl acrylate | 0 | 0 | 0 | 74.0 | 37.0 | 0 | 0 | 0 | 0 |
| | Ethyl acrylate | 0 | 0 | 0 | 0 | 0 | 0.0 | 0 | 0 | 74.0 |
| | Acrylic acid | 6 | 6 | 6 | 6 | 6 | 6 | 6 | 6 | 6 |
| | 4-Hydroxybutyl acrylate | 0 | 0 | 0 | 0 | 0 | 0 | 0 | 0 | 0 |
| | Ethylene-butylene macromonomer | 20 | 20 | 20 | 20 | 20 | 0 | 0 | 0 | 20 |
| | Methyl methacrylate macromonomer | 0 | 0 | 0 | 0 | 0 | 0 | 20 | 0 | 0 |
| | Ethylene glycol macromonomer | 0 | 0 | 0 | 0 | 0 | 0 | 0 | 20 | 0 |
| Molecular weight | Mw [$\times 10^4$] | 15 | 30 | 150 | 70 | 70 | 70 | 70 | 30 | 70 |
| Molecular weight distribution | Mw/Mn | 2.7 | 3.5 | 4.5 | 3.5 | 3.5 | 3.5 | 3.5 | 3.5 | 3.5 |

(Example 1)

YS Polyster G150 in an amount of 30 parts by weight as a tackifier resin was added to 100 parts by weight of the solids of the ethyl acetate solution of the acrylic copolymer 1 and mixed to prepare an adhesive solution.

A 50-$\mu$m-thick polyethylene terephthalate (PET) film whose one surface was release-treated was provided. The obtained adhesive solution was applied to the release-treated surface with a doctor blade to a dry film thickness of 40 um. The applied solution was dried at 110°C for five minutes to prepare an adhesive tape. The details of the tackifier resin are as follows.

YS Polyster G150: terpene phenolic resin, produced by Yasuhara Chemical Co., Ltd., hydroxy value 140 mg KOH/g

(Examples 2 to 30 and Comparative Examples 1 to 4)

Adhesive tapes were obtained as in Example 1 except that the composition of the adhesive solution was as shown in Tables 3 and 4. The details of the tackifier resins and the cross-linking agents are as follows.

YS Polyster U115: terpene phenolic resin, produced by Yasuhara Chemical Co., Ltd., hydroxy value 20 mg KOH/g
YS Polyster K125: terpene phenolic resin, produced by Yasuhara Chemical Co., Ltd., hydroxy value 200 mg KOH/g
Arkon P140: hydrogenated petroleum resin, produced by Arakawa Chemical Industries Ltd., hydroxy value 0 mg KOH/g
YS Resin PX800: terpene resin, produced by Yasuhara Chemical Co., Ltd., hydroxy value 0 mg KOH/g
Coronate L-45: isocyanate cross-linking agent, produced by Tosoh Corporation

<Physical properties>

The following measurements were performed on the adhesive tapes obtained in the examples and the comparative examples. Tables 3 and 4 show the results.

(Loss tangent measurement)

First, a measurement sample consisting of an adhesive layer was prepared by the method described above.

A dynamic viscoelastic spectrum from -50°C to 200°C of the obtained measurement sample was measured using a viscoelastic spectrometer (DVA-200, produced by IT Measurement Co., Ltd.) at 5°C/min and 1 Hz in a low-heating-rate, shear deformation mode. From the obtained dynamic viscoelastic spectrum, the peak temperature of the loss tangent (tan $\delta$) was obtained.

(SAXS measurement)

An adhesive layer alone was prepared by the method described above, and bonded to a sample stage having a thickness of 1 mm, whereby a measurement sample was prepared. The obtained measurement sample was subjected to SAXS measurement under the following conditions using an X-ray diffraction device (SmartLab, produced by Rigaku Corporation) and the like. Thus, a scattering vector q at 23°C was obtained.

Subsequently, another adhesive layer was bonded to a copper plate having a thickness of 100 um, whereby a measurement sample was prepared. The obtained measurement sample was placed and heated on a hot plate (PCC100G, produced by MCA FACTORY). Five minutes after the temperature reached 100°C or 150°C, SAXS measurement was performed to obtain a scattering vector at 100°C or 150°C. When the scattering peak of the obtained scattering vector was in the range from 0.05 nm$^{-1}$ to 1.0 nm$^{-1}$, "o" (Present) was given. When the scattering peak was not in the range, "-" (Absent) was given. Tables 3 and 4 show the results. The results of the SAXS measurements for Example 19 were shown in FIG. 1.

X-ray source: CuK$_{\alpha}$ (wavelength $\lambda$: 0.154 nm)
tube voltage: 9 kW
optical system: small-angle scattering
measurement range: 0.06 to 2°
measurement step: 0.02°
scan speed: 1°/min

(Gel fraction measurement)

First, 0.1 g of the adhesive of the adhesive layer was scraped off, immersed in 50 ml of ethyl acetate, and shaken with a shaker at a temperature of 23°C at 200 rpm for 24 hours. After shaking, a metal mesh (aperture #200 mesh) was used to separate ethyl acetate and the adhesive having swollen by absorbing ethyl acetate. The separated adhesive was dried at 110°C for one hour. The weight of the adhesive including the metal mesh after drying was measured, and the gel fraction was calculated using the following equation (1).

$$\text{Gel fraction (\%)} = 100 \times (W_1 - W_2)/W_0 \quad (1)$$

($W_0$: the initial weight of the adhesive, $W_1$: the weight of the adhesive including the metal mesh after drying, $W_2$: the initial weight of the metal mesh)

<Evaluation>

The adhesive tapes obtained in the examples and the comparative examples were evaluated as follows. Tables 3 and 4 show the results.

(Adhesion evaluation)

The adhesive tape was cut to a width of 25 mm to prepare a specimen. Subsequently, the obtained specimen was bonded to a SUS plate. A 1-kg rubber roller was moved back and forth once thereon for compression bonding, whereby a measurement sample was prepared. The obtained measurement sample was left to stand at 23°C for 24 hours, and subjected to a 180° peel test in conformity with JIS Z 0237:2009 at a tensile speed of 300 mm/min. The adhesion (N/25 mm) at 23°C was measured, and the adhesion was evaluated based on the following criteria.

∞ (Excellent): 45 N/25 mm or greater
∘ (Good): 30 N/25 mm or greater and less than 45 N/25 mm
Δ (Fair): 20 N/25 mm or greater and less than 30 N/ 25 mm
✕ (Poor): less than 20 N/25 mm

(Holding power evaluation)

The holding power of the obtained adhesive tape was measured by the following method using a shear creep measurement device (produced by Asahi Seiko Co., Ltd., NST1) shown in FIG. 2.

First, one release film of the obtained adhesive tape was removed. To the exposed adhesive layer was bonded a corona-treated polyethylene terephthalate (PET) film, followed by cutting to 1 cm in width × 12 cm in length to prepare a specimen 5. A thermoregulator 4 of the device was set to 60°C and left to stand until stabilization at the set temperature. The thermoregulator 4 was a combination of the following.

Thermoregulator SA100, model: SA100FK08-MN-4 NN-NN, produced by TAKAGI MFG. Co., Ltd.

Copper Peltier water-colling unit, model: PU-50W, produced by TAKAGI MFG. Co., Ltd.

EYELA water circulation chiller Cool Ace, model: CCA1111, produced by Tokyo Rikakikai Co., Ltd.

Next, about 3 cm from an end of the other release film of the specimen 5 was removed, and the exposed adhesive layer was bonded to an adherend 3 (stainless steel specified in JIS Z 0237) such that the adhesion area was 1 cm × 1 cm. A quartz block 2 (chromium-evaporated quartz glass) with a mirror-polished end surface was placed on the surface of the specimen 5 bonded to the adherend 3, and the specimen 5 was attached to a wire connected to a weight 6 (50 g). The specimen was left to stand in this state, and the temperature was regulated to a constant temperature for five minutes. After five minutes, a PC connected to the device was operated to start applying a load. A shear load in a horizontal direction was applied to the specimen 5 for three minutes. With a laser interferometer 1 (SI-F10, produced by Keyence Corporation), the amount of shift displacement accompanying the deformation of the adhesive was detected as the amount of travel of the mirror-polished quartz block 2 on the specimen. The holding power was evaluated based on the following criteria.

∞ (Excellent): 10 um or less
∘ (Good): greater than 10 um and 50 um or less
∆ (Fair): greater than 50 um and 100 um or less
× (Poor): greater than 100 um

[Table 3]

| | | | | Example | | | | | | | | | | | | | | | |
|---|---|---|---|---|---|---|---|---|---|---|---|---|---|---|---|---|---|---|---|
| | | | | 1 | 2 | 3 | 4 | 5 | 6 | 7 | 8 | 9 | 10 | 11 | 12 | 13 | 14 | 15 |
| Adhesive layer composition | Acrylic copolymer | Type | - | 1 | 2 | 3 | 4 | 5 | 6 | 7 | 8 | 9 | 10 | 11 | 12 | 13 | 14 | 15 |
| | | Amount | Parts by weight | 100 | 100 | 100 | 100 | 100 | 100 | 100 | 100 | 100 | 100 | 100 | 100 | 100 | 100 | 100 |
| | Tackifier resin | YS Polyster U115 | Parts by weight | - | - | - | - | - | - | - | - | - | - | - | - | - | - | - |
| | | YS Polyster G150 | Parts by weight | 30 | 30 | 30 | 30 | 30 | 30 | 30 | 30 | 30 | 30 | 30 | 30 | 30 | 30 | 30 |
| | | YS Polyster K125 | Parts by weight | - | - | - | - | - | - | - | - | - | - | - | - | - | - | - |
| | | Arkon P140 | Parts by weight | - | - | - | - | - | - | - | - | - | - | - | - | - | - | - |
| | Cross-linking agent | Coronate L-45 | Parts by weight | - | - | - | - | - | - | - | - | - | - | - | - | - | - | - |
| Physical properties | Tan δ peak temperature 1 | | °C | 19 | 19 | 20 | 30 | 31 | 3 | 22 | 5 | 35 | 41 | 20 | 20 | 20 | 30 | 23 |
| | Tan δ peak temperature 2 | | °C | - | - | - | - | - | - | - | - | - | - | - | - | - | - | - |
| | Scattering peak of scattering vector q (23°C) | | | ○ | ○ | ○ | ○ | ○ | ○ | ○ | ○ | ○ | ○ | ○ | ○ | ○ | ○ | ○ |
| | Scattering peak of scattering vector q (100°C) | | | ○ | ○ | ○ | ○ | ○ | ○ | ○ | ○ | ○ | ○ | ○ | ○ | ○ | ○ | ○ |
| | Scattering peak of scattering vector q (150°C) | | | - | ○ | ○ | ○ | | - | ○ | ○ | ○ | ○ | - | ○ | ○ | - | ○ |
| | Gel fraction | | % | 0 | 0 | 0 | 0 | 0 | 0 | 0 | 0 | 0 | 0 | 0 | 0 | 0 | 0 | 0 |

(continued)

| Evaluation | | Example | | | | | | | | | | | | | | |
|---|---|---|---|---|---|---|---|---|---|---|---|---|---|---|---|---|
| | | 1 | 2 | 3 | 4 | 5 | 6 | 7 | 8 | 9 | 10 | 11 | 12 | 13 | 14 | 15 |
| Evaluation | Adhesion | ○ | ○ | ○○ | ○ | ○ | Δ | ○ | ○ | ○ | Δ | ○○ | ○○ | ○○ | Δ | ○○ |
| | Holding power | Δ | ○ | ○○ | ○ | Δ | ○ | ○ | ○ | ○○ | ○○ | Δ | ○ | ○○ | Δ | ○ |

EP 4 332 192 A1

[Table 4]

| Adhesive layer composition | | | | Example | | | | | | | | | | | | | | |
|---|---|---|---|---|---|---|---|---|---|---|---|---|---|---|---|---|---|---|
| | | | | 16 | 17 | 18 | 19 | 20 | 21 | 22 | 23 | 24 | 25 | 26 | 27 | 28 | 29 | 30 |
| | Acrylic copolymer | Type | - | 3 | 3 | 3 | 3 | 3 | 3 | 3 | 3 | 3 | 3 | 3 | 3 | 3 | 3 | 3 |
| | | Amount | Parts by weight | 100 | 100 | 100 | 100 | 100 | 100 | 100 | 100 | 100 | 100 | 100 | 100 | 100 | 100 | 100 |
| | Tackifier resin | YS Polyster U115 | Parts by weight | - | 30 | - | - | - | - | - | - | - | - | - | - | - | - | - |
| | | YS Polyster G150 | Parts by weight | - | - | - | 1 | 40 | 50 | - | 30 | 30 | 30 | 30 | - | 20 | 20 | 20 |
| | | YS Polyster K125 | Parts by weight | - | - | 30 | - | - | - | - | - | - | - | - | - | - | - | - |
| | | Arkon P140 | Parts by weight | - | - | - | - | - | - | 30 | 5 | - | - | - | - | - | - | - |
| | | YS Resin PX800 | Parts by weight | - | - | - | - | - | - | - | - | - | - | - | 40 | 10 | 60 | 70 |
| | Cross-linking agent | Coronate L-45 | Parts by weight | - | - | - | - | - | - | - | - | 0.1 | 0.5 | 3.0 | - | - | - | - |

EP 4 332 192 A1

EP 4 332 192 A1

(continued)

|  |  |  | Example |  |  |  |  |  |  |  |  |  |  |  |  |  |  |
|---|---|---|---|---|---|---|---|---|---|---|---|---|---|---|---|---|---|
|  |  |  | 16 | 17 | 18 | 19 | 20 | 21 | 22 | 23 | 24 | 25 | 26 | 27 | 28 | 29 | 30 |
| Physical properties | Tanδ peak temperature 1 | °C | -16 | 12 | 20 | -14 | 32 | 42 | -12 | 25 | 20 | 20 | 20 | -8 | 13 | 25 | 34 |
|  | Tanδ peak temperature 2 | °C | - | - | - | - | - | - | - | - | - | - | - | - | - | - | - |
|  | Scattering peak of scattering vector q (23°C) |  | ○ | ○ | ○ | ○ | ○ | ○ | ○ | ○ | ○ | ○ | ○ | ○ | ○ | ○ | ○ |
|  | Scattering peak of scattering vector q (100°C) |  | ○ | ○ | ○ | ○ | ○ | ○ | ○ | ○ | ○ | ○ | ○ | ○ | ○ | ○ | ○ |
|  | Scattering peak of scattering vector q (150°C) |  | ○ | ○ | ○ | ○ | ○ | ○ | - | - | ○ | ○ | ○ | - | - | - | - |
|  | Gel fraction | % | 0 | 0 | 0 | 0 | 0 | 0 | 0 | 0 | 20 | 40 | 55.0 | 0.0 | 0.0 | 0.0 | 0.0 |
| Evaluation | Adhesion |  | ○ | ○○ | ○○ | ○○ | ○○ | △ | ○ | ○ | △ | △ | △ | ○ | ○○ | ○○ | ○ |
|  | Holding power |  | ○○ | ○○ | ○○ | ○○ | ○○ | ○○ | △ | ○ | ○○ | ○○ | ○○ | △ | △ | △ | △ |

16

[Table 4a]

| | | | | Comparative Example | | | |
|---|---|---|---|---|---|---|---|
| | | | | 1 | 2 | 3 | 4 |
| Adhesive layer composition | Acrylic copolymer | Type | - | 16 | 17 | 18 | 19 |
| | | Amount | Parts by weight | 100 | 100 | 100 | 100 |
| | Tackifier resin | YS Polyster U115 | Parts by weight | - | - | - | - |
| | | YS Polyster G150 | Parts by weight | 30 | 30 | 30 | 30 |
| | | YS Polyster K125 | Parts by weight | - | - | - | - |
| | | Arkon P140 | Parts by weight | - | - | - | - |
| | | YS Resin PX800 | Parts by weight | - | - | - | - |
| | Cross-linking agent | Coronate L-45 | Parts by weight | - | - | - | - |
| Physical properties | Tan$\delta$ peak temperature 1 | | °C | 23 | 25 | 17 | 52 |
| | Tan$\delta$ peak temperature 2 | | °C | - | 130 | - | - |
| | Scattering peak of scattering vector q (23°C) | | | - | ○ | ○ | ○ |
| | Scattering peak of scattering vector q (100°C) | | | - | ○ | - | ○ |
| | Scattering peak of scattering vector q (150°C) | | | - | ○ | - | - |
| | Gel fraction | | % | 0 | 0 | 0 | 0 |
| Evaluation | Adhesion | | | ○ | × | ○ | × |
| | Holding power | | | × | ○ | × | ○ |

[Table 4b]

INDUSTRIAL APPLICABILITY

The present invention can provide an adhesive tape achieving both excellent adhesion and excellent holding power.

REFERENCE SIGNS LIST

1 laser interferometer
2 mirror-polished quartz block
3 adherend (stainless steel specified in JIS Z 0237)
4 thermoregulator
5 specimen (double-sided adhesive tape)
6 weight
7 adhesive layer
8 remaining release film surface
9 corona-treated PET film surface
10 mirror-polished surface

**Claims**

1. An adhesive tape comprising an adhesive layer,

the adhesive layer having a scattering peak in a scattering vector q range from 0.05 nm$^{-1}$ to 1.0 nm$^{-1}$ in small-

angle X-ray scattering (SAXS) measurement at 23°C and a scattering peak in a scattering vector q range from 0.05 nm$^{-1}$ to 1.0 nm$^{-1}$ in small-angle X-ray scattering (SAXS) measurement at 100°C, and

the adhesive layer having peaks of a loss tangent tan $\delta$ as determined by dynamic viscoelasticity measurement at a measurement frequency of 1 Hz, a temperature of a peak observed at the highest temperature among the peaks being 45°C or lower.

2. The adhesive tape according to claim 1,
wherein the adhesive layer has a scattering peak in the scattering vector q range from 0.05 nm$^{-1}$ to 1.0 nm$^{-1}$ in small-angle X-ray scattering (SAXS) measurement at 150°C.

3. The adhesive tape according to claim 1 or 2,
wherein the adhesive layer contains an acrylic copolymer.

4. The adhesive tape according to claim 3,
wherein the acrylic copolymer contains a structure derived from an alkyl (meth)acrylate and a structure derived from an olefinic polymer having a polymerizable unsaturated double bond at an end.

5. The adhesive tape according to claim 3 or 4,
wherein the acrylic copolymer contains a structure derived from a polar group-containing monomer.

6. The adhesive tape according to claim 5,
wherein the polar group-containing monomer contains a carboxy group.

7. The adhesive tape according to claim 5 or 6,
wherein the acrylic copolymer contains 0.1% by weight or more and 10% by weight of the structure derived from a polar group-containing monomer.

8. The adhesive tape according to any one of claims 3 to 7,
wherein the acrylic copolymer has a weight average molecular weight of 200,000 or greater and 2,000,000 or less.

9. The adhesive tape according to any one of claims 3 to 8,
wherein the acrylic copolymer contains 5% by weight or more and 30% by weight or less of the structure derived from an olefinic polymer having a polymerizable unsaturated double bond at an end.

10. The adhesive tape according to any one of claims 3 to 9,
wherein the adhesive layer contains a high-hydroxy-value tackifier resin having a hydroxy value of 15 mg KOH/g or greater.

11. The adhesive tape according to claim 10,
wherein the adhesive layer contains 1 part by weight or more and 40 parts by weight or less of the high-hydroxy-value tackifier resin relative to 100 parts by weight of the acrylic copolymer.

12. The adhesive tape according to any one of claims 3 to 11,
wherein an amount of a low-hydroxy-value tackifier resin having a hydroxy value of less than 15 mg KOH/g in the adhesive layer is 5 parts by weight or less relative to 100 parts by weight of the acrylic copolymer.

13. The adhesive tape according to any one of claims 3 to 11,
wherein an amount of a low-hydroxy-value tackifier resin having a hydroxy value of less than 15 mg KOH/g in the adhesive layer is 10 parts by weight or more and 60 parts by weight or less relative to 100 parts by weight of the acrylic copolymer.

14. The adhesive tape according to claim 13,
wherein the adhesive layer contains 1 part by weight or more and 40 parts by weight or less of the high-hydroxy-value tackifier resin relative to 100 parts by weight of the acrylic copolymer.

15. The adhesive tape according to any one of claims 1 to 14,
wherein the adhesive layer has a gel fraction of less than 50%.

FIG.1

FIG.2

(Magnified view of portion A)

## INTERNATIONAL SEARCH REPORT

| International application No. |
| --- |
| **PCT/JP2022/019069** |

**A.     CLASSIFICATION OF SUBJECT MATTER**

*C09J 11/08*(2006.01)i; *C08F 220/10*(2006.01)i; *C09J 123/00*(2006.01)i; *C09J 133/00*(2006.01)i; *C09J 133/06*(2006.01)i; *C09J 151/06*(2006.01)i; *C09J 7/38*(2018.01)i
FI:    C09J7/38; C09J123/00; C09J11/08; C08F220/10; C09J133/00; C09J133/06; C09J151/06

According to International Patent Classification (IPC) or to both national classification and IPC

**B.     FIELDS SEARCHED**

Minimum documentation searched (classification system followed by classification symbols)

C09J11/08; C08F220/10; C09J123/00; C09J133/00; C09J133/06; C09J151/06; C09J7/38

Documentation searched other than minimum documentation to the extent that such documents are included in the fields searched

Published examined utility model applications of Japan 1922-1996
Published unexamined utility model applications of Japan 1971-2022
Registered utility model specifications of Japan 1996-2022
Published registered utility model applications of Japan 1994-2022

Electronic data base consulted during the international search (name of data base and, where practicable, search terms used)

**C.     DOCUMENTS CONSIDERED TO BE RELEVANT**

| Category* | Citation of document, with indication, where appropriate, of the relevant passages | Relevant to claim No. |
| --- | --- | --- |
| X | WO 2016/194937 A1 (MITSUBISHI RAYON CO., LTD.) 08 December 2016 (2016-12-08) claims, paragraphs [0005], [0012]-[0028], [0031]-[0037], [0050], [0052], [0053], examples | 1-9, 12, 15 |
| X | JP 2005-521774 A (NATIONAL STARCH AND CHEMICAL INVESTMENT HOLDING CORP.) 21 July 2005 (2005-07-21) claims, paragraphs [0005], [0011]-[0021], [0025]-[0029], examples | 1-9, 12-13, 15 |
| X | JP 9-502467 A (AVERY DENNISON CORP.) 11 March 1997 (1997-03-11) claims, p. 5, lines 4-6, p. 9, line 28 to p. 10, line 26, p. 13, line 10 to p. 14, line 7, p. 15, lines 7-25, examples | 1-9, 12-13, 15 |
| X | JP 2016-540856 A (TESA SE) 28 December 2016 (2016-12-28) claims, paragraphs [0001]-[0004], [0027]-[0043], [0045]-[0054], [0059]-[0061], examples | 1-11, 13-15 |
| X | JP 8-143847 A (SEKISUI CHEMICAL CO., LTD.) 04 June 1996 (1996-06-04) claims, paragraphs [0009], [0011]-[0014], [0019], [0021]-[0024], [0029], examples | 1-11, 13-15 |
| X | JP 2003-013027 A (SEKISUI CHEMICAL CO., LTD.) 15 January 2003 (2003-01-15) claims, paragraphs [0010]-[0012], [0014]-[0023], [0035]-[0037], examples | 1-11, 13-15 |

☑ Further documents are listed in the continuation of Box C.     ☑ See patent family annex.

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
| --- | --- |
| **07 July 2022** | **19 July 2022** |

| Name and mailing address of the ISA/JP | Authorized officer |
| --- | --- |
| **Japan Patent Office (ISA/JP)** **3-4-3 Kasumigaseki, Chiyoda-ku, Tokyo 100-8915** **Japan** | |
| | Telephone No. |

Form PCT/ISA/210 (second sheet) (January 2015)

**INTERNATIONAL SEARCH REPORT**

| International application No. |
|---|
| **PCT/JP2022/019069** |

**C.    DOCUMENTS CONSIDERED TO BE RELEVANT**

| Category* | Citation of document, with indication, where appropriate, of the relevant passages | Relevant to claim No. |
|---|---|---|
| A | JP 63-260975 A (NITTO DENKO CORP.) 27 October 1988 (1988-10-27)<br>entire text | 1-15 |

Form PCT/ISA/210 (second sheet) (January 2015)

## INTERNATIONAL SEARCH REPORT
### Information on patent family members

International application No.

**PCT/JP2022/019069**

| Patent document cited in search report | | | Publication date (day/month/year) | Patent family member(s) | | | Publication date (day/month/year) |
|---|---|---|---|---|---|---|---|
| WO | 2016/194937 | A1 | 08 December 2016 | US | 2018/0142055 | A1 | |
| | | | | claims, paragraphs [0009], [0010], [0025]-[0048], [0055]-[0070], [0089], [0091], [0092], examples | | | |
| | | | | KR | 10-2018-0012816 | A | |
| JP | 2005-521774 | A | 21 July 2005 | US | 2003/0022980 | A1 | |
| | | | | claims, paragraphs [0005], [0011]-[0021], [0025]-[0029], examples | | | |
| | | | | WO | 2003/083005 | A1 | |
| | | | | CN | 1622987 | A | |
| | | | | KR | 10-0885931 | B1 | |
| JP | 9-502467 | A | 11 March 1997 | US | 5625005 | A | |
| | | | | claims, column 1, lines 10-14, column 3, line 45 to column 4, line 16, column 5, line 43 to column 6, line 11, column 6, line 50 to column 7, line 7, examples | | | |
| | | | | WO | 1995/002003 | A1 | |
| | | | | EP | 707604 | A1 | |
| | | | | KR | 10-1996-0703956 | A | |
| JP | 2016-540856 | A | 28 December 2016 | US | 2016/0304754 | A1 | |
| | | | | claims, paragraphs [0001]-[0004], [0040]-[0057], [0059]-[0070], [0076]-[0084], examples | | | |
| | | | | WO | 2015/082143 | A1 | |
| | | | | EP | 3077200 | A1 | |
| | | | | CN | 105916677 | A | |
| | | | | KR | 10-2016-0095045 | A | |
| JP | 8-143847 | A | 04 June 1996 | (Family: none) | | | |
| JP | 2003-013027 | A | 15 January 2003 | (Family: none) | | | |
| JP | 63-260975 | A | 27 October 1988 | (Family: none) | | | |

Form PCT/ISA/210 (patent family annex) (January 2015)

**REFERENCES CITED IN THE DESCRIPTION**

**Patent documents cited in the description**

- JP 2009242541 A
- JP 2009258274 A
- JP 2012214544 A